# EUROPÄISCHE PATENTANMELDUNG

(11) **EP 0 812 617 A2**
(43) Veröffentlichungstag der Anmeldung: **17.12.1997**
(21) Anmeldenummer: 97107050.3
(22) Anmeldetag: 29.04.1997
(51) Int. Cl.: B01J 8/00, B01D 46/12, B01D 45/16, B04C 5/14, H01M 8/06

(54) **Reformierungsreaktoranlage und hierfür verwendbares Partikel-filter**

(30) Priorität: 15.06.1996 DE 19623998
(71) Anmelder: DAIMLER-BENZ AKTIENGESELLSCHAFT, 70567 Stuttgart (DE)
(72) Erfinder: Autenrieth, Rainer, 89155 Erbach (DE); Heil, Dietmar, 88477 Schwendi (DE); Hänfling, Joser, 88677 Markdorf (DE); Wiesheu, Norbert, 89312 Günzburg (DE)

(57) **Zusammenfassung**

Die Erfindung bezieht sich auf eine Reformierungsreaktoranlage mit einer Reaktoreinheit mit katalysatorbefülltem Reaktionsraum und mit einem Partikelfilter, das in einer Reformatgasleitung stromabwärts der Reaktoreinheit angeordnet ist, sowie auf ein dafür verwendbares Partikelfilter.

Erfindungsgemäß wird das Katalysatormaterial im Reaktionsraum von einem Sieb getragen, unter dem sich ein Metallvlies zum Auffangen ausgesiebter Bruchstücke und Staubpartikel der Katalysatorschüttung befindet, und/oder das Partikelfilter beinhaltet ein Stahlwollegespinst und/oder mehrere seriell hintereinandergeschaltete Filterstufen, und/oder das Partikelfilter ist ohne Betriebsunterbrechung der Anlage austauschbar angeordnet. Speziell sind ein Partikelfilter mit quer zur Gasströmung gasdicht wechselbarem Filterkörper und/oder ein Zyklonfilter mit Verschlußeinrichtung zwecks betriebsunterbrechungsfreiem Entleeren eines Partikelsammeltopfs verwendbar.

Verwendung z.B. für Anlagen zur Wasserdampfreformierung von Methanol in brennstoffzellenbetriebenen Kraftfahrzeugen.

## Beschreibung

Die Erfindung bezieht sich auf eine Reformierungsreaktoranlage mit wenigstens einer mit Katalysatormaterial befüllten Reaktoreinheit und einem Partikelfilter, das in einer Reformatgasleitung stromabwärts der Reaktoreinheit angeordnet ist, sowie auf dafür verwendbares Partikelfilter.

Eine Anlage der eingangs genannten Art ist in der Patentschrift US 2.671.719 offenbart. Die dortige Anlage dient zur industriellen Erzeugung eines Gasgemischs aus Wasserstoff und Kohlenmonoxid. Dabei wird zunächst in einer Reduktionsreaktionskammer ein Kohlenwasserstoff mit einem Metalloxid unter Bildung von Kohlenstoffoxiden, Wasserstoff, Wasser und freiem Metall reagiert und anschließend die zugehörige Suspension als Fontäne in eine Reformierungsreaktoreinheit eingespeist, in der die gewünschte Reformierungsreaktion abläuft. Das erhaltene Reformatgas wird über eine Reformatgasleitung abgeführt, in der ein Zyklonfilter angeordnet ist, um mitgerissene Feststoffpartikel abzuseparieren. Die abseparierten Partikel werden über eine unten an das Zyklonfilter angeschlossene Rückleitung in eine stromaufwärts der Reformierungsreaktoreinheit angeordnete Reduktionsreaktionskammer rückgespeist.

Zyklonfilter sind allgemein zur Partikelabscheidung in verschiedenen Bauformen bekannt, siehe z.B. die Offenlegungsschrift DE 41 11 031 A1 sowie die Patentschriften GB 1 534 019, GB 737 457, DE 39 34 183 C1 und DE 521 682. Ein mehrstufiges Partikelfilter, bei dem eine erste Stufe von einem Zyklonfilter und eine zweite Stufe aus Sintermetall-Feinfilterelementen gebildet sind, ist in der Offenlegungsschrift EP 0 580 005 A2 offenbart. Ein Filter zur Partikelabscheidung, das aus mehreren hintereinanderliegenden Gewebelagen unterschiedlicher Durchlässigkeit besteht, ist z.B. in der Offenlegungsschrift DE 44 17 347 A1 beschrieben. Ein weiteres derartiges Filter, das vorzugsweise in pyrotechnischen Gasgeneratoren für Airbags von Kraftfahrzeugen eingesetzt wird, ist in der Offenlegungsschrift DE 42 04 758 A1 beschrieben. Bei Bedarf ist zwischen die Filtergewebelagen eine als Wärmeschild wirkende Keramikpapierfolie eingebracht. Ein weiterer Filtertyp beinhaltet mehrere, in Gasströmungsrichtung hintereinandergeschaltete Lochplatten, die mit in Strömungsrichtung kleiner werdenden Lochdurchmessern gestaltet und/oder mit quer zur Strömungsrichtung gegeneinander versetzten Öffnungen angeordnet sind, siehe z.B. die Gebrauchsmuster DE 87 90 076 U1 und DE 91 02 970 U1 sowie die Offenlegungsschriften DE 34 07 617 A1 und DE 39 10 554 A1. Partikelfilter in Form von Fasergeflechten sind beispielsweise in den Offenlegungsschriften DE 40 33 019 A1, DE 42 23 278 A1 und FR 2 409 079 sowie den Gebrauchsmustern DE 92 18 021 U1 und DE 69 19 686 beschrieben.

In den Offenlegungsschriften JP 2-120203 (A) und JP 63-129002 (A) sind Reformierungsreaktoren offenbart, bei denen das Katalysatormaterial in der Reaktoreinheit als Pelletschüttung vorliegt, die von einem Sieb getragen wird. Unterhalb des Siebs schließt sich ein leerer Auslaßraum an, von dem seitlich ein Reformatgasauslaß ausmündet, über den das Reformatgas die Reformierungsreaktoreinheit verläßt.

Der Erfindung liegt als technisches Problem die Bereitstellung einer insbesondere zur Wasserdampfreformierung von Methanol geeigneten Reformierungsreaktoranlage, die einen weitestgehend partikelfreien Reformatgasstrom liefert, sowie eines hierfür verwendbaren Partikelfilters zugrunde.

Die Erfindung löst dieses Problem durch die Bereitstellung einer Reformierungsreaktoranlage mit den Merkmalen des Anspruchs 1 oder 2 sowie eines Partikelfilters mit den Merkmalen des Anspruchs 5 oder 6.

Bei der Reformierungsreaktoranlage nach Anspruch 1 ist die Reaktoreinheit mit einer Katalysatorpelletschüttung befüllt, die von einem Sieb getragen ist, mit dem Pelletbruchstücke und Pelletstaubpartikel aus der Schüttung ausgesiebt werden, indem sie aufgrund ihrer Schwerkraft nach unten durch das Sieb fallen. Die Maschenweite des Siebs ist hierzu kleiner als die typischen Abmessungen unbeschädigter Pellets und größer als die Abmessungen durchzusiebender Bruchstücke und Staubpartikel gewählt. Mittels des unter dem Sieb angeordneten Metallvlieses werden die durch das Sieb ausgesiebten Bruchstücke aufgefangen. Da sich das Metallvlies noch innerhalb des Reaktionsraums der Reaktoreinheit befindet, können die aufgefangenen Bruchstücke weiterhin ihre katalytische Wirkung entfalten. Als weiterer Vorteil können die im Metallvlies aufgefangenen Bruchstücke zu keiner Verstopfung der nachfolgenden Gasstromfilter führen. Dabei wird der Reformatgasstrom aus dem Raum zwischen Sieb und Metallvlies abgezogen, ohne durch das Metallvlies hindurchströmen zu müssen. Es versteht sich, daß bei Bedarf auch eine umgekehrte Strömungsrichtung vorgesehen sein kann, wobei dann das zu reformierende Gasgemisch in diesen Sieb-Metallvlies-Zwischenraum eingespeist wird.

Das in der Reformatgasleitung angeordnete Partikelfilter filtert Partikel aus, die vom in der Reaktoreinheit erzeugten Reformatgas mitgerissen wurden, so daß ausgangsseitig des Partikelfilters ein weitestgehend partikelfreier Reformatgasstrom erhalten wird. Bei der Wasserdampfreformierung von Methanol zwecks Erzeugung von Wasserstoff für eine nachgeschaltete Brennstoffzellenanordnung, beispielsweise für ein brennstoffzellenbetriebenes Kraftfahrzeug, wird dadurch verhindert, daß Partikel, z.B. in Form feiner Katalysatorpartikel, von der Reformatgasströmung in die Brennstoffzellen mitgerissen werden und die dortigen Katalysatormaterialien ungünstig beeinflussen. Zudem werden durch das Aussieben und Ausfiltern von Partikeln den Strömungswiderstand erhöhende Verstopfungen in der Reaktoreinheit und im anschließenden Reformatgasströmungsweg verhindert. Ein solchermaßen aufgebauter Reformierungsreaktor eignet sich besonders auch für den Einsatz in Kraftfahrzeugen, wo die Gefahr der Entstehung von Pelletbruchstücken und Pelletstaubpartikeln aufgrund von Erschütterungen im Fahrbetrieb besonders groß ist.

Bei der Reformierungsreaktoranlage nach Anspruch 2 beinhaltet das in der Reformatgasleitung angeordnete Partikelfilter ein Stahlwollegespinst und/oder mehrere seriell hintereinandergeschaltete Filterstufen. Es zeigt sich, daß damit gerade auch für den mobilen Anwendungsfall einer in einem Fahrzeug angeordneten Anlage zur Wasserdampfreformierung von Methanol mit relativ geringem Aufwand ein von mitgerissenen Partikeln zuverlässig gereinigter Reformatgasstrom erhalten wird.

Bei einer nach Anspruch 3 weitergebildeten Reformierungsreaktoranlage ist das Partikelfilter unter Zwischenfügung einer thermischen Isolierung in die Reformatgasleitung eingesetzt. Die thermische Isolierung verhindert unerwünschte thermische Verluste, z.B. in Form einer Auskondensation von Wasser an kalten Wandungen.

Die Reformierungsreaktoranlage nach Anspruch 4 enthält ein Partikelfilter, das so in der Reformatgasleitung angeordnet ist, daß es ohne Betriebsunterbrechung ausgetauscht werden kann. Das vermeidet Betriebsunterbrechungen der Anlage aufgrund eines erforderlich gewordenen Austauschs oder einer Reinigung des Partikelfilters.

Bei dem Partikelfllter nach Anspruch 5 kann der jeweils verwendete Filterkörper problemlos ohne Betriebsunterbrechung der Anlage ausgetauscht werden, indem er quer zur Gasstromleitung von einem frisch eingeschobenen Filterkörper aus dem Filtergehäuse herausgeschoben wird. Dabei sind Abdichtmittel vorgesehen, die sicherstellen, daß bei diesem Auswechselvorgang kein nennenswerter Gasverlust auftritt.

Das Zyklonfilter nach Anspruch 6 beinhaltet einen Zyklontopf und einen darunter abnehmbar anschließbaren Partikelsammeltopf sowie eine Verschlußeinrichtung, die den Zyklontopf bei angeschlossenem Partikelsammeltopf zu letzterem hin offenhält, während sie ihn bei abgenommenem Partikelsammeltopf verschlossenen hält. Dabei ist die Verschlußeinrichtung so ausgelegt, daß die Öffnungs- und Schließbewegung selbsttätig mit dem Anschließen bzw. Abnehmen des Partikelsammeltopfes erfolgt.

Bei einem nach Anspruch 7 weitergebildeten Zyklonfilter beinhaltet die Verschlußeinrichtung einen gegen die Zyklontopfwand in einer Schließstellung elastisch andrückbaren Verschlußkörper sowie ein Betätigungselement, das den Verschlußkörper beim Anschließen des Partikelsammeltopfs in eine von der Zyklontopfwand beabstandete Öffnungsstellung drückt.

Vorteilhafte Ausführungsformen der Erfindung sind in den Zeichnungen dargestellt und werden nachfolgend beschrieben. Hierbei zeigen:
- Fig. 1: eine schematische Längsschnittansicht eines unteren Bereichs einer Reformierungsreaktoreinheit und eines anschließenden Reformatgasleitungsabschnitts mit eingebrachtem Partikelfilter,
- Fig. 2: eine schematische Längsschnittansicht eines in der Reformatgasleitung von Fig. 1 verwendbaren Partikelfilters in Form eines Stahlwollegespinstes,
- Fig. 3: eine schematische Explosionsansicht eines in der Reformatgasleitung von Fig. 1 verwendbaren Partikelfilters in Form eines Mehrlagen-Maschenfilters,
- Fig. 4: eine schematische Explosionsansicht eines in der Reformatgasleitung von Fig. 1 verwendbaren Partikelfilters in Form eines Mehrlagen-Lochfilters,
- Fig. 5: eine schematische Längsschnittansicht durch das Filter von Fig. 4,
- Fig. 6: eine Ansicht entsprechend Fig. 5, jedoch für ein modifiziertes Mehrlagen-Lochfilter,
- Fig. 7: eine Ansicht entsprechend Fig. 5, jedoch für ein weiteres modifiziertes Mehrlagen-Lochfilter,
- Fig. 8: eine schematische Längsschnittansicht eines thermisch isoliert in die Reformatgasleitung von Fig. 1 eingebrachten Mehrloch-Partikelfilters,
- Fig. 9: eine Längsschnittansicht eines in die Reformatgasleitung von Fig. 1 eingebrachten Partikelfilters mit betriebsunterbrechungsfrei auswechselbarem Filterkörper,
- Fig. 10: eine schematische Längsschnittansicht entsprechend Fig. 9 während eines Filterkörper-Wechselvorgangs und
- Fig. 11: eine Längsschnittansicht eines in der Reformatgasleitung von Fig. 1 verwendbaren Zyklonfilters mit betriebsunterbrechungsfreier Partikelentnahmemöglichkeit.

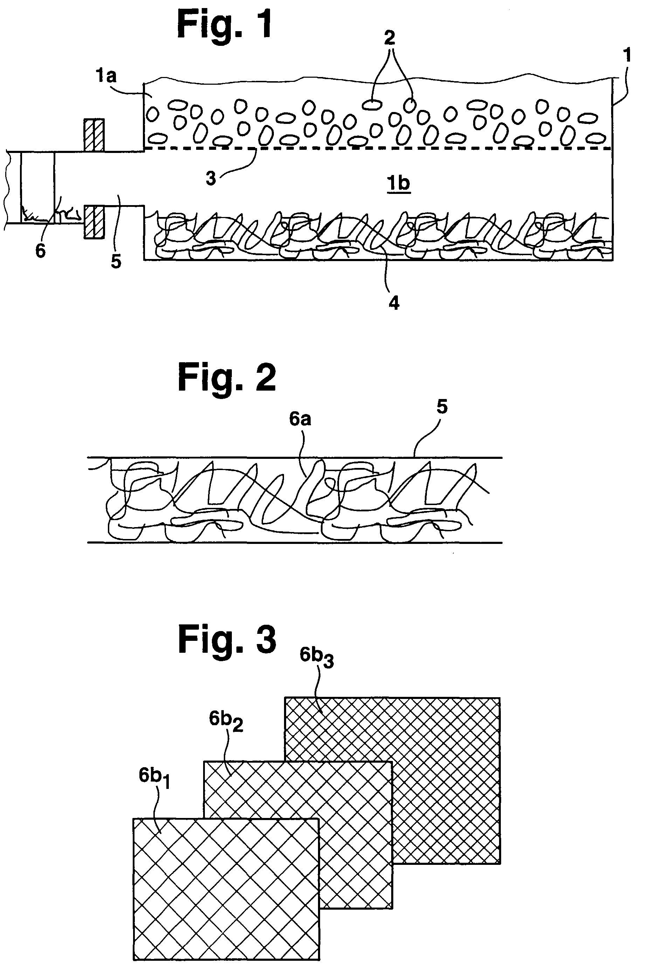

In Fig. 1 ist ein Reaktionsraum 1 einer Reformierungsreaktoreinheit in seinem unteren Bereich gezeigt. Die Reaktoreinheit kann z.B. Teil einer Reformierungsreaktoranlage zur Wasserdampfreformierung von Methanol sein, die in einem brennstoffzellenbetriebenen Kraftfahrzeug angeordnet ist, um den für die Brennstoffzellen benötigten Wasserstoff zu erzeugen. In einem oberen Abschnitt 1a ist der Reaktionsraum 1 mit einer Katalysatorpelletschüttung 2 befüllt, für die z.B. ein Cu/ZnO/Al₂O₃-Material verwendet wird, das bei geeigneter Temperatur die endotherme Wasserdampfreformierung von Methanol katalysiert. Die Schüttung 2 ist von einer Siebplatte 3 getragen, die den oberen Reaktionsraumabschnitt 1a von einem darunterliegenden Reaktionsraumabschnitt 1b trennt. Die Maschenweite der Siebplatte 3 ist so gewählt, daß Pelletbruchstücke und Pelletstaubpartikel, die durch Brechen von Pellets und Abrieb derselben aneinander z.B. aufgrund von Erschütterungen entstehen, durch die Siebplatte 3 nach unten hindurchfallen können, während die unbeschädigten Pellets größer als die Maschenweite der Siebplatte 3 sind. Die ausgesiebten Pelletbruchstücke und Pelletstaubpartikel gelangen in den unteren Reaktionsraumabschnitt 1b. Dort werden sie von einem Metallvlies 4 aufgefangen, das sich noch innerhalb des Reaktionsraums 1 befindet. Die darin aufgefangenen Pelletbruchstücke und Pelletstaubpartikel können dadurch vorteilhafterweise weiterhin ihre katalytische Wirkung für die Reformierungsreaktion ausüben, soweit der am Metallvlies 4 vorbeiströmende Gasstrom noch unreagierte Bestandteile enthält.

Unterhalb des Niveaus der Siebplatte 3 und über dem Niveau des mit Abstand zur Siebplatte 3 angeordneten Metallvlieses 4 ist ein seitlicher Reformatgasauslaß vorgesehen, von dem eine Reformatgasleitung 5 abführt. In die Reformatgasleitung 5 ist ein Partikelfilter 6 eingebracht, das vorzugsweise abnehmbar angeordnet ist. Dieses Filter 6 ist so ausgelegt, daß es auch sehr feine Pelletstaubpartikel zurückzuhalten vermag, die ggf. aufgrund ihrer geringen Schwerkraft von der Reformatgasströmung mitgerissen werden, ohne sich auf dem Metallvlies 4 abzusetzen. Das Filter 6 kann bei Bedarf von den abgefangenen Pelletstaubpartikeln gereinigt werden. Analog kann das Metallvlies 4 bei Bedarf über den Reformatgasauslaß aus dem Reaktionsraum 1 herausgenommen und von den aufgefangenen Pelletbruchstücken und Pelletstaubpartikeln gereinigt werden.

Durch das Aussieben bzw. Ausfiltern der Pelletbruchstücke und Pelletstaubpartikel wird zuverlässig verhindet, daß es zu Verstopfungen im Gasführungsweg der Reaktoreinheit durch solche Bruchstücke oder Staubpartikel kommen kann. Der Reaktor eignet sich daher besonders gut für den Einsatz in Kraftfahrzeugen, wo sich erschütterungsbedingt in hohem Maße solche Bruchstücke und Staubpartikel des Katalysatormaterials bilden können. Vorteilhafte Arten von Partikelfiltern, die in der Reformatgasleitung 5 verwendet werden können, werden nachfolgend unter Bezugnahme auf die Figuren 2 bis 11 näher erläutert.

Fig. 2 zeigt einen Anwendungsfall, bei dem in die Reformatgasleitung 5 als Partikelfilter ein Stahlwollegespinst 6a eingebracht ist. Beim Durchtritt des Reformatgasstroms durch das Stahlwollegespinst 6a lagern sich selbst feine Staubpartikel an demselben ab, so daß ausgangsseitig ein von Partikeln gereinigter Reformatgasstrom zur Verfügung steht, beispielsweise in Form eines wasserstoffreichen Gases zur Einspeisung in ein Brennstoffzellensystem.

Fig. 3 zeigt ein weiteres, beispielsweise in der Reformatgasleitung 5 von Fig. 1 verwendbares Partikelfilter in Form eines Mehrlagen-Maschenfilters. Dieses Filter besteht aus einer vorgebbaren Anzahl von Vliesmaschenlagen 6b₁, 6b₂, 6b₃, die in Gasströmungsrichtung als Filterkaskade hintereinanderliegend angeordnet sind. Dabei ist die Maschenweite einer jeweils in Strömungsrichtung nachfolgenden Vliesmaschenlage kleiner gewählt als diejenige der vorangehenden Vliesmaschenlage. Dies realisiert eine Filterkaskade mit gestaffelter Partikelabscheidung, die ein Verstopfen der feinmaschigeren Lagen durch gröbere Partikel verhindert, indem diese bereits in einer grobmaschigeren, vorgeschalteten Vliesmaschenlage abgefangen werden. Auf diese Weise wird eine lange Gebrauchsdauer des Filters, insbesondere auch der Vliesmaschenlage mit der feinsten Maschenweite, erreicht.

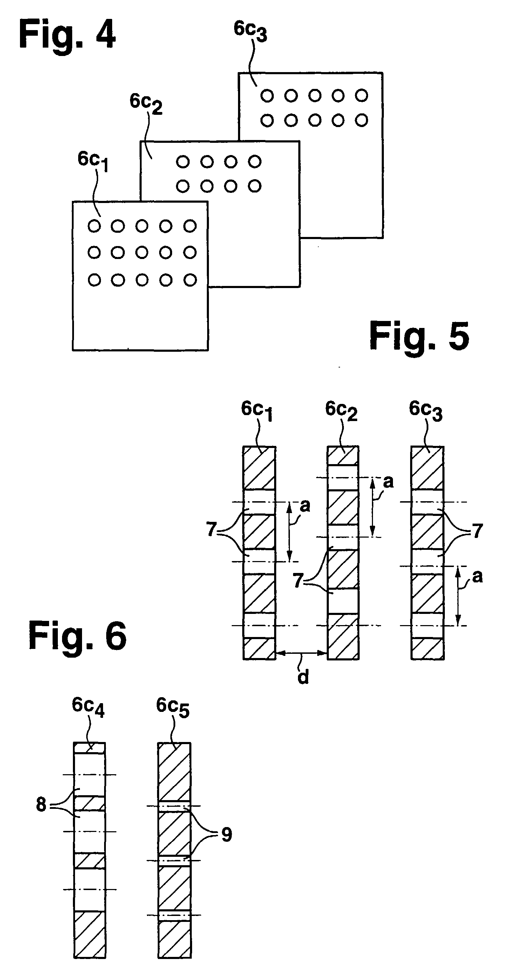

Ein weiteres mehrstufiges Partikelfilter, das in der Reformatgasleitung 5 von Fig. 1 verwendbar ist, ist in Fig. 4 schematisch dargestellt. Dieses Filter ist als Mehrlagen-Lochfilter gestaltet, das aus einer vorgebbaren Anzahl von Lochblechmembranen 6c₁, 6c₂, 6c₃ gebildet ist, die wiederum in Gasströmungsrichtung hintereinanderliegend angeordnet sind, wobei die Öffnungen in den einzelnen Membranen 6c₁, 6c₂, 6c₃ in der Explosionsansicht von Fig. 4 der Einfachheit halber nicht sämtlich dargestellt sind. Verschiedene mögliche Realisierungen eines solchen Mehrlagen-Lochfilters sind in den Figuren 5 bis 7 veranschaulicht.

Fig. 5 zeigt einen Längsschnitt durch das Mehrlagen-Lochfilter von Fig. 4, aus dem ersichtlich ist, daß bei diesem Filter drei gleiche Membranen 6c₁, 6c₂, 6c₃ verwendet sind, d.h. die einzelnen Membranen 6c₁, 6c₂, 6c₃ besitzen dasselbe Lochmuster mit identischen Abmessungen der einzelnen Durchtrittslöcher 7. Um die gewünschte Partikelabscheidung zu bewirken, sind je zwei aufeinanderfolgende Lochblechmembranen um den halben Lochmusterabstand a versetzt und in Strömungsrichtung um eine vorgebbare Distanzlänge d beabstandet angeordnet. Für den hindurchtretenden Gasstrom ergeben sich dadurch zwangsläufig Strömungspfadumlenkungen, die zu einer Absonderung mitgerissener Partikel führen, so daß die abgesonderten Partikel zwischen den einzelnen Lochblechmembranen 6c₁, 6c₂, 6c₃ nach unten fallen.

Fig. 6 zeigt eine erste Variante des Filters von Fig. 5, bei der einzelne Lochblechmembranen 6c₄, 6c₅ mit unterschiedlich dimensionierten Durchtrittslöchern 8, 9 in Gasströmungsrichtung mit Abstand hintereinanderliegend angeordnet sind. Dabei sind die Membranen 6c₄, 6c₅ mit abnehmendem Lochdurchmesser hintereinandergeschaltet, d.h. die Löcher 8 einer in Strömungsrichtung vorderen Membran 6c₄ sind weiter als diejenigen 9 einer nachfolgenden Membran 6c₅. Zudem sind die Lochblechmembranen 6c₄, 6c₅ wiederum mit einem gegenseitigen Querversatz derart angeordnet, daß die Lochbereiche einer jeweiligen Membran in Filterlängsrichtung, d.h. in der hauptsächlichen Gasströmungsrichtung, mit abgedeckten Bereichen der benachbarten Membranen fluchten, wodurch dem hindurchtretenden Gasstrom Umlenkbewegungen aufgezwungen werden, welche die gewünschte Partikelabsonderung bewirken. Durch die abgestufte Lochgröße der Membranen 6c₄, 6c₅ von Fig. 6 können die Partikel zwischen den einzelnen Membranen 6c₄, 6c₅ nach Größe sortiert abgefangen werden, wodurch Verstopfungen der feineren Membranlöcher durch gröbere Partikel in gleicher Weise wie beim Filter von Fig. 3 verhindert werden.

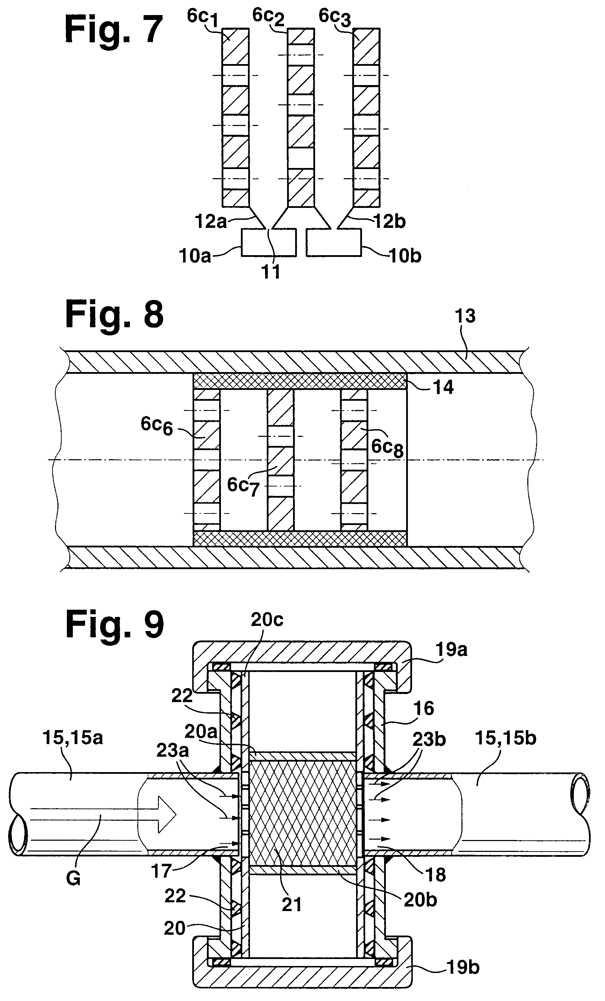

Bei einer in Fig. 7 gezeigten zweiten Variante des Filters gemäß der Figuren 4 und 5 ist den Zwischenräumen zwischen den einzelnen Lochblechmembranen 6c₁, 6c₂, 6c₃, in denen sich, wie oben erläutert, die Partikel aus dem durch das Filter hindurchgeführten Gasstrom absondern und nach unten fallen, jeweils ein Partikelsammelbehälter 10a, 10b zugeordnet, mit denen die herabfallenden, ausgefilterten Partikel aufgefangen werden. Dabei sind die Partikelsammelbehälter 10a, 10b, mit engen Eintrittsschlitzen 11 versehen, in die Sammeltrichter 12a, 12b einmünden, die sich jeweils von den gegenüberliegenden Unterkanten benachbarter Lochblechmembranen verengend nach unten erstrecken, um die herabfallenden Partikel in die Sammelbehälter 10a, 10b zu leiten. Durch diese Gestaltung der Partikelsammelvorrichtung wird erreicht, daß abgesonderte Partikel nicht wieder von vorbeiströmendem Gas aufgewirbelt und mitgerissen werden. Im übrigen versteht es sich, daß mehrstufige Partikelfilter der in den Figuren 3 bis 7 beschriebenen Arten nicht auf die jeweils gezeigte Anzahl von Filterstufen beschränkt sind, sondern eine beliebige, für die jeweilige Anwendung geeignete Anzahl einzelner Filterlagen enthalten können.

Fig. 8 zeigt ein Mehrlagen-Lochfilter des Typs der Figuren 4 bis 7 in seiner in eine Rohrleitung 13, beispielsweise eine Reformatgasleitung, eingefügten Betriebsstellung. In diesem Beispiel beinhaltet das Filter eine thermisch isolierende Ummantelung 14, mit der die einzelnen, in Gasströmungsrichtung hintereinanderliegenden Lochblechmembranen 6c₆, 6c₇, 6c₈ gegenüber der Wandung der Rohrleitung 13 thermisch isoliert sind. Dies vermeidet thermische Verluste, wie Auskondensation von Wasser an kalten Leitungswänden. Alternativ kann dieser unerwünschte Effekt durch Verwendung von hydrophoben Filtergeweben erzielt werden.

Fig. 9 zeigt ein in einer Rohrleitung 15, z.B. einer Reformatgasleitung, vorgesehenes Partikelfilter, das so ausgelegt ist, daß ein Filteraustausch ohne Betriebsunterbrechung möglich ist, d.h. der Betrieb einer der Leitung 15 beispielsweise vorgeschalteten Reformierungsreaktoreinheit muß zu diesem Zweck nicht unterbrochen werden. Das Partikelfilter beinhaltet dazu ein Filtergehäuse 16 mit einer Gehäuseeinlaßöffnung 17, in die der zuführende Abschnitt 15a der Rohrleitung 15 eingesetzt und mit dem Öffnungsrand gasdicht verschweißt ist, sowie mit einer Gehäuseauslaßöffnung 18, in die der austrittsseitige Abschnitt 15b der Rohrleitung 15 eingesetzt und mit dem Öffnungsrand gasdicht verschweißt ist. Das Filtergehäuse 16 ist von zylindrischer Form mit quer zur Gasströmungsrichtung G verlaufender Längsachse. An seinen beiden offenen Stirnenden ist das Filtergehäuse 16 mit je einer Schraubkappe 19a, 19b mit integrierter Dichtung gasdicht verschließbar. Im Filtergehäuse 16 ist ein zylindrischer Filterträger 20 axial verschieblich aufgenommen, der im Betrieb in seiner axialen Lage durch die aufgesetzten Schraubkappen 19a, 19b fixiert bleibt.

Der Filterträger 20 trägt in einem mittleren Bereich einen Filterkörper 21, z.B. in Form eines Metallvlieskörpers, der quer zur Gasströmungsrichtung G von zwei gasdichten Begrenzungswandungen 20a, 20b des Filterträgers 20 begrenzt ist. Hingegen ist der Zylindermantel 20c des Filterträgers 20 in dem an den Filterkörper 21 angrenzenden, mittleren Abschnitt gasdurchlässig perforiert ausgebildet. Mit seinen beiden Endabschnitten liegt der Filterträgermantel 20c gegen beispielsweise O- oder V-förmige Ringdichtungen 22 an, die sich andererseits gegen die Innenwand des Filtergehäuses 16 abstützen.

Im Betrieb wird über den eintrittsseitigen Abschnitt 15a der Rohrleitung 15 ein ggf. mit mitgerissenen Partikeln belasteter Gasstrom 23a zugeführt und durch den perforierten Filterträgermantelabschnitt hindurch in den Filterkörper 21 eingeleitet, der während des Durchtritts des Gasstroms die geforderte Partikelabscheidung bewirkt. Der Gasstrom verläßt dann den Filterkörper 21 austrittsseitig über den perforierten Filterträgermantelabschnitt und gelangt als von mitgerissenen Partikeln gereinigter Gasstrom 23b in den austrittseitigen Abschnitt 15b der Rohrleitung 15.

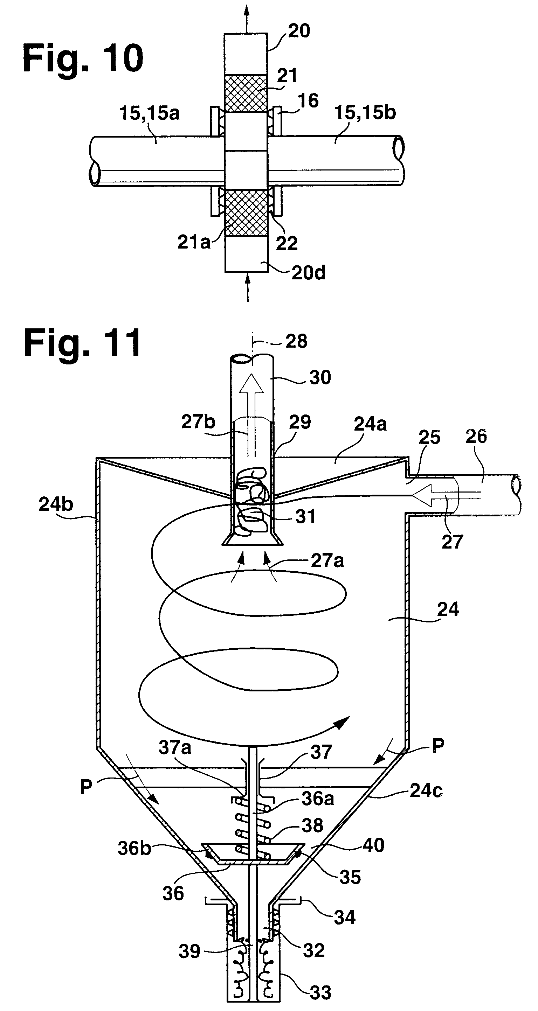

Wenn der Filterkörper 21 mit abgeschiedenen Partikeln gesättigt ist, kann durch das speziell gebaute Partikelfilter gemäß Fig. 9 ein betriebsunterbrechungsfreier Filteraustausch erfolgen, wie dies in Verbindung mit Fig. 10 zu erkennen ist. Für einen solchen Filteraustausch werden zunächst die beiden Schraubkappen 19a, 19b abgenommen, so daß der eingesetzte Filterträger 20 axial aus dem Filtergehäuse 16 herausbewegt werden kann. Dazu wird von einer Gehäusestirnseite her ein neuer Filterträger 20d mit einem frischen Filterkörper 21a in das Filtergehäuse 16 eingeschoben. Der neu eingeschobene Filterträger 20d drückt gleichzeitig den bisher eingesetzten Filterträger 20 auf der anderen Gehäusestirnseite heraus. Fig. 10 zeigt die Situation mit halb eingefügtem neuem Filterträger 20d und halb herausgeschobenem, bisher eingesetztem Filterträger 20. Da der Zylindermantel der Filterträger 20, 20d nur in seinem mittleren, dem Filterkörper 21, 21a zugeordneten Abschnitt gasdurchlässig ausgebildet ist, sperren die Mantelflächen der beiden Filterträger 20, 20d in den Zwischenpositionen während eines solchen Filteraustauschs den Gaseinlaß 17 bzw. das eingefügte Ende des zuführenden Rohrleitungsabschnitts 15a, und den Gasauslaß 18 des Partikelfilters bzw. das eingesetzte Ende des abführenden Rohrleitungsabschnitts 15b ab, wodurch ein seitliches Entweichen von merklichen Gasmengen während dieses kurzen Filterwechselzeitraums verhindert wird. Unterstützend dichten die Runddichtungen 22 den Spalt zwischen dem Filtergehäuse 16 und den hindurchbewegten Filterträgern 20, 20d ab. Sobald der neue Filterträger 20d seine Betriebsstellung erreicht hat, liegt der bisher eingesetzte Filterträger 20 frei und kann einer Reinigung zugeführt werden. Nach Aufschrauben der Schraubkappen 19a, 19b ist der neu eingesetzte Filterträger 20d in seiner axialen Lage fixiert, und sein Filterkörper 21a bewirkt für den anschließenden Betriebszeitraum die geforderte Partikelabscheidung.

Auf diese Weise kann ein jeweils erschöpfter Filterkörper außerhalb der Rohrleitung 15, in welcher der zu reinigende Gasstrom geführt wird, gereinigt werden, so daß insbesondere keine Betriebsunterbrechung der mit der Rohrleitung 15 verknüpften Anlage, z.B. einer Reformierungsreaktoranlage, zwecks Fluten der Leitung 15 mit einem Reinigungsgasstrom erforderlich ist. Zudem wird bei einem Filterwechsel des Partikelfilters von Fig. 9 ein Eindringen von Sauerstoff in die Rohrleitung 15 und damit ggf. in angeschlossene Reformierungsreaktoreinheiten vermieden, der eine unerwünschte Deaktivierung von dort befindlichem Reformierungskatalysatormaterial verursachen könnte.

Ein weiteres Partikelfilter, das z.B. in einer Reformatgasleitung einer Reformierungsreaktoranlage verwendbar ist und ein Abziehen abgeschiedener Partikel ohne Betriebsunterbrechung der Anlage ermöglicht, ist in Fig. 11 in Form eines speziellen Zyklonfilters veranschaulicht. Das dort gezeigte Zyklonfilter beinhaltet einen Zyklontopf 24, der in einem oberen Bereich eine seitliche Gaseinlaßöffnung 25 aufweist, an die ein eintrittsseitiger Rohrleitungsabschnitt 26 angeschlossen ist, über den ein von eventuell mitgerissenen Partikeln zu reinigender Gasstrom 27 zugeführt wird. Dies kann insbesondere ein von einer Reaktoreinheit einer Reformierungsreaktoranlage erzeugter Reformatgasstrom sein. Von der Zyklontopfseitenwand 24b und einem unterseitig kegelförmig gestalteten Zyklontopfdeckel 24a wird der eintretende Gasstrom 27 in eine spiralig um die Zyklonfilterlängsachse 28 nach unten verlaufende Strömung umgelenkt.

In den Topfdeckel 24a ist eine mittige Gasauslaßöffnung 29 eingebracht, durch die ein austrittseitiger Rohrleitungsabschnitt 30 nach oben aus dem Zyklontopf 24 herausführt. Zum Verlassen des Zyklontopfs 24 steigt die zuvor spiralig abwärts geleitete Gasströmung im Zyklontopf 24 nach oben in die austrittsseitige Rohrleitung 30. Durch diesen Strömungsverlauf scheiden sich im Zyklontopf 24 die im zugeführten Gasstrom 27 ggf. enthaltenen Partikel nach unten fallend ab, so daß ein bereits weitestgehend von mitgerissenen Partikeln gereinigter Gasstrom 27a in die austrittsseitige Rohrleitung 30 eintritt. Um die Partikelabscheidungswirkung weiter zu erhöhen und insbesondere noch im Gasstrom 27a enthaltene, feinste Staubpartikel aus demselben zu entfernen, ist in der austrittsseitigen Rohrleitung 30 des weiteren ein Strömungsfilter in Form eines Stahlwollgespinstes 31 angeordnet. Stromabwärts des Stahlwollegespinstes 31 steht damit ein hochgradig von mitgerissenen Partikeln gereinigter Gasstrom 27b in der austrittsseitigen Rohrleitung 30 zur Verfügung.

Der Zyklontopf 24 verjüngt sich nach unten trichterförmig und endet in einem Partikelauslaß 32. Zum Auffangen von durch den Partikelauslaß 32 austretenden Partikeln ist ein Partikelsammeltopf 33 von unten an das Trichterende des Zyklontopfs 24 mittels eines Schraubverschlusses 34 anschließbar. Der Partikelsammeltopf 33 kann bei Bedarf, z.B. wenn er sich mit nach unten fallenden Partikeln gefüllt hat, die im Zyklontopf 24 vom durchgeleiteten Gasstrom absepariert wurden, vom Zyklontopf 24 abgenommen und durch einen leeren Partikelsammeltopf ersetzt bzw. nach Entleeren wieder angeschlossen werden. Um dies im laufenden Betrieb, d.h. ohne Unterbrechung der Gasströmung durch das Zyklonfilter, bewerkstelligen zu können, beinhaltet das Zyklonfilter eine geeignete selbsttätige Verschlußeinrichtung. Diese umfaßt einen Verschlußkörper 36, der über einen Schaft 36a axial beweglich in einer an der Trichterwand 24c des Zyklontopfs 24 fixierten Führung 37 geführt ist. Der Ventilkörper 36 wird von einer als Druckfeder wirkenden Schraubenfeder 38 nach unten gedrückt, die sich oben gegen einen Federsitz 37a der Führung 37 abstützt. Die radiale Außenfläche 36b des tellerförmigen Ventilkörpers 36 ist kegelstumpfförmig mit einer zur Zyklontopf-Trichterwand 24c passenden Steigung gestaltet und stellt im Zusammenwirken mit der Trichterwand 24c die Schließfläche der Verschlußeinrichtung dar, die somit einen druckfederbelasteten Konusverschluß bildet. An ihrer radialen, konischen Außenseite trägt die Schließfläche 36b eine Ringdichtung 35.

Zur Betätigung der Verschlußeinrichtung ist am Partikelsammeltopf 33 ein Betätigungsstift 39 vorgesehen, der den Ventilkörper 36 bei angeschlossenem Partikelsammeltopf 33, wie in Fig. 11 gezeigt, gegen die Druckfederkraft nach oben drückt und dadurch von der Zyklontopf-Trichterwand 24c abhebt. Die im Zyklonfilter aus dem durchgeführten Gasstrom abgeschiedenen, nach unten fallenden Partikel gelangen auf die schräge Zyklontopf-Trichterwand 24c und bewegen sich, wie mit dem Pfeil P angedeutet, entlang der Trichterwand 24c durch den zwischen dieser und der Ventilkörper-Schließfläche 36b gebildeten Spalt 40 nach unten in den Partikelsammeltopf 33. Wenn der Partikelsammeltopf 33 zwecks Entleerung abgenommen wird, zieht sich der Betätigungsstift 39 aus dem Zyklontopf 24 zurück, so daß sich der Ventilkörper 36 durch seine Schwerkraft und durch die Kraft der Druckfeder 38 nach unten bewegt, bis seine Schließfläche 36b gegen die Zyklontopf-Trichterwand 24c abdichtend zur Anlage kommt. Die Druckfeder 38 gewährleistet diese selbsttätige Schließbewegung auch dann, wenn die Ventilkörperschwerkraft wegen andersartiger räumlicher Orientierung des Zyklonfilters nicht in dieser Richtung wirkt. Der Konusverschluß erreicht die Schließstellung noch bevor der Partikelsammeltopf 33 ganz vom Zyklontopf 24 abgenommen ist und verhindert somit zuverlässig, daß bei abgenommenem Partikelsammeltopf 33 Partikel aus dem Zyklontopf 24 nach unten austreten können. Andererseits braucht der Betrieb des Zyklonfilters für den Wechsel des Partikelsammeltopfs 33 nicht unterbrochen zu werden, da sich die bis zum Anschließen eines leeren Partikelsammeltopfs 33 im Zyklonfilter aus dem Gasstrom abseparierten Partikel problemlos an der Zyklontopf-Trichterwand 24c über dem Verschlußkörper 36 ansammeln können.

Sobald dann ein leerer Partikelsammeltopf 33 wieder unten an den Zyklontopf 24 angeschlossen wird, hebt beim Aufsetzen und Aufschrauben des Partikelsammeltopfs 33 an den unteren Teil der Zyklontopf-Trichterwand 24c dessen Betätigungsstift 39 automatisch den Ventilkörper 36 nach oben unter Bildung des Partikeldurchlaßspalts 40 von der Zyklontopf-Trichterwand 24c gegen die Kraft der Druckfeder 38 ab und hält ihn in dieser Öffnungsstellung. Auf diese Weise kann bei Einsatz des Zyklonfilters in einer chemischen Prozeßanlage, wie einer Reformierungsreaktoranlage, ein Entleeren des Zyklonfilters von abseparierten Partikeln ohne Betriebsunterbrechung des Zyklonfilters und damit der gesamten Prozeßanlage bewerkstelligt werden.

Insgesamt lassen sich durch Einsatz eines oder in Kombination mehrerer der gezeigten Partikelfilter erfindungsgemäße Reformierungsreaktoranlagen realisieren, die besonders auch zur Wasserdampfreformierung von Methanol in brennstoffzellenbetriebenen Kraftfahrzeugen verwendbar sind und dabei die an solche mobilen Anlagen zu stellenden Anforderungen, wie hohe Partikelfreiheit des Reformatgasstroms, geringer Druckverlust des Gasstroms, Temperaturbeständigkeit bis wenigstens etwa 250°C, geringe Wärmeverluste und Filterwechsel ohne Sauerstoffeintritt in den Reaktor sowie Montagefreundlichkeit, in optimaler Weise erfüllen.

## Patentansprüche

1. Reformierungsreaktoranlage, insbesondere zur Wasserdampfreformierung von Methanol, mit
- einer Reaktoreinheit mit katalysatorbefülltem Reaktionsraum (1) und
- einem Partikelfilter (6), das in einer Reformatgasleitung (5) stromabwärts der Reaktoreinheit angeordnet ist,
**gekennzeichnet durch**
- ein Sieb (3), das eine in den Reaktionsraum (1) eingebrachte Katalysatorschüttung (2) trägt, und
- ein Metallvlies (4) zum Auffangen der ausgesiebten Bruchstücke und Staubpartikel, das im Reaktionsraum mit Abstand unterhalb des auf das Aussieben von Bruchstücken und Staubpartikeln der Katalysatorschüttung ausgelegten Siebs unter Bildung eines zwischenliegenden, metallvliesfreien Raums angeordnet ist, an den die Reformatgasleitung (5) angeschlossen ist.

2. Reformierungsreaktoranlage, insbesondere nach Anspruch 1, mit
- einer Reaktoreinheit mit katalysatorbefülltem Reaktionsraum (1) und
- einem Partikelfiler (6), das in einer Reformatgasleitung (5) stromabwärts der Reaktoreinheit angeordnet ist,
**dadurch gekennzeichnet, daß**
- das Partikelfilter ein Stahlwollegespinst (6a) und/oder mehrere seriell hintereinandergeschaltete Filterstufen (6b₁, 6b₂, 6b₃) beinhaltet.

3. Reformierungsreaktoranlage nach Anspruch 2, weiter
**dadurch gekennzeichnet, daß** das Partikelfilter unter Zwischenfügung einer thermischen Isolierung (14) in die Reformatgasleitung eingesetzt ist.

4. Reformierungsreaktoranlage, insbesondere nach einem der Ansprüche 1 bis 3, mit
- einer Reaktoreinheit mit katalysatorbefülltem Reaktionsraum (1) und
- einem Partikelfiler (6), das in einer Reformatgasleitung (5) stromabwärts der Reaktoreinheit angeordnet ist,
**dadurch gekennzeichnet, daß**
- das Partikelfilter (20, 21) ohne Betriebsunterbrechung der Anlage austauschbar in der Reformatgasleitung angeordnet ist.

5. Partikelfilter, insbesondere zur Verwendung in einer Reformierungsreaktoranlage nach einem der Ansprüche 1 bis 4, mit
- einem in eine Gasstromleitung (15) einsetzbaren Filterkörper (21),
**gekennzeichnet durch**
- ein Filtergehäuse (16), in das die Gasstromleitung (15) an einem Gaseinlaß (17) einmündet und aus dem sie an einem Gasauslaß (18) ausmündet und in das ein jeweiliger Filterkörper quer zur Längsachse der Gasstromleitung (15) auswechselbar derart einschiebbar ist, daß während eines Filterwechsels ein bisher eingesetzter Filterkörper (21) von einem neu in das Filtergehäuse (16) eingeschobenen Filterkörper (21a) aus dem Filtergehäuse herausgeschoben wird, wobei Abdichtmittel gegen ein Austreten von Gas während des Filterwechsels vorgesehen sind.

6. Zyklonfilter, insbesondere zur Verwendung in einer Reformierungsreaktoranlage nach einem der Ansprüche 1 bis 4, mit
- einem Zyklontopf (24), der eine Gaseinlaßöffung (25) und eine Gasauslaßöffnung (29) aufweist und
- einem unten an den Zyklontopf abnehmbar anschließbaren Partikelsammeltopf (33),
**gekennzeichnet durch**
- eine Verschlußeinrichtung (35 bis 39), die den Zyklontopf (24) nach unten beim Anschließen des Partikelsammeltopfs (33) selbsttätig öffnet und beim Abnehmen des Partikelsammeltopfs selbsttätig verschließt.

7. Zyklonfilter nach Anspruch 6, weiter
**dadurch gekennzeichnet, daß**
die Verschlußeinrichtung einen beweglich im Zyklontopf (24) angeordneten Verschlußkörper (36), der von einer Druckfeder (38) in eine gegen die Zyklontopfwand (24c) anliegende Schließstellung gedrückt wird, und ein Betätigungselement (39) beinhaltet, das den Verschlußkörper beim Anschließen des Partikelsammeltopfs (33) gegen die Druckfederkraft in eine von der Zyklontopfwand (24c) beabstandete Öffnungsstellung drückt.
